# EUROPEAN PATENT APPLICATION

(11) **EP 1 889 535 A1**
(43) Date of publication of application: **20.02.2008**
(21) Application number: 07075685.3
(22) Date of filing: 14.08.2007
(51) Int. Cl.: A01F 25/13, A01F 25/16

(54) **System for bringing a cover over, either removing it from silage present in a silo**

(30) Priority: 16.08.2006 NL 1032330
(71) Applicant: Bokano VOF, 8517 HH Scharsterbrug (NL)
(72) Inventor: Bosch, Hotze, 9087 CE Swichum (NL); Kaastra, Wijtze, 9001 EH Grouw (NL); Noppert, Jentje, 8501 ZS Joure (NL)
(74) Representative: Lips, Hendrik Jan George

(57) **Abstract**

System for bringing a reusable cover (13) over, either removing it from silage, in which use is made of an U-shaped silo (1) in which said silage is stored. Said system comprises a carriage (5) with wheels (6) which is motoric movable over the upper rims (4) of the upstanding walls (3) of said silo (1) and is provided with means (11,15) for rotatably supporting a motoric driven spool (12) on which said cover (13) can be present. Longitudinally extending hoses (16) are connected to said cover (13) which in pressed flat condition can be spooled onto said spool (12) together with said cover (13) and when said cover is unspooled can be filled with liquid. In particular along both the longitudinal rims (17) of said cover (13) hoses (16) are present which by bringing liquid into them are pressed against the walls (3) of said silo (1) over the total length of said cover (13).

## Description

The invention relates to a system for bringing a reusable cover over, either removing it from silage, in which use is made of an U-shaped silo in which said silage is stored, said system comprising a carriage with wheels which can roll over the upper rims of the upstanding walls of said silo, which carriage supports a motoric drivable spool on which said cover can be spooled either unspooled, said cover being provided with longitudinally running liquid fillable hoses.

Such a system is known by US 2003/0.172.597-A. In case of this known system moving said carriage in one direction takes place by pumping liquid, in particular water, in said hoses, thereby expanding said hoses and unspooling said cover of said spool.

Moving said carriage together with said spool with cover can be made easier by the fact that the upper rim of said walls have a downward slope in the direction in which said carriage moves when said cover is unspooled.

In particular when said system is in rest and must be moved considerable forces will have to be exerted. So the pressure of the liquid pumped into said hoses will have to be relatively high.

By this it is possible that said cover does not remain in the flat condition but will be bent upwardly so that it will no longer contribute to the movement of said carriage. Further it is possible that said hoses will go to pieces under said high pressure, such that said cover also will go to pieces.

In view of the fact that the width and length of said silos are continuously increasing it is rather difficult to make the downward slope of the upper rims of said side walls of a silo so large that by this a remarkable contribution to the movement of said carriage is obtained.

When removing silage out of said silo said cover has to be spooled onto said spool and the carriage has to be brought back to its final position. In case of said known system use is made of cables connected to said carriage and running over said cover towards the related end of said silo. At said end the cables extend over the top of downturn pulleys and are taken up by drums, present between the side walls of said silo.

By this it is caused that said cover, at the position where said cables are moving downwardly towards said take up drums in said silo, will be pressed towards the center of said silo by said cables. So said cover will no longer take care for a suitable sealing of said silage from the atmosphere.

Now the object of the invention is to remove the disadvantages mentioned before and this is obtained in that the wheels of said carriage are motoric driven and that along both the longitudinal rims of said cover hoses are present which by bringing liquid into them are pressed against the walls of said silo over the total length of said cover.

By motoric driving said wheels it is not necessary that the upper rims of the side walls of said silo are sloping downwardly. This makes building of said silo and the use of said system easier, while improving the effective use of said silo by obtaining a constant height of said side walls.

Further it is not necessary to provide the carriage with cables and by this the hoses present near the longitudinal rims of said cover can be pressed against the walls of said silo over the total length of said cover. By this a better sealing of the silo is obtained so that penetration of rainwater in said silage is prevented.

In particular the hoses extending along both longitudinal rims of said cover can be executed stronger than the other hoses. By this the engagement of those hoses against said walls can be increased further.

As no cables are connected to said carriage for moving this, one carriage can be used for several silos. When for example one silo is emptied and said cover is completely spooled onto the related spool on said carriage, said spool can be removed from said carriage and the latter can be loaded with an empty spool and can be brought to another silo which has to be emptied.

To bring said cover from the silo, which has to be emptied, onto the spool present on said carriage, the free end of the relatively heavy cover will have to be connected to said spool which is at a higher level.

As this might cause troubles according to the invention, said end of a cover is provided with a number of flexible ribbons which can easely be connected to the empty spool present on said carriage. By this bringing the end of said relatively heavy cover is remarkable facilitated.

According to an embodiment of the invention liquid can be supplied to the hoses of said cover by using a float chamber which is positioned above the level of said cover and in which by means of said float and a pump always liquid will be present.

Further said float chamber can be provided with an overflow by means of which liquid can flow away out of said hoses when said cover is spooled onto said spool.

The invention is further explained by way of examples shown in the drawing, in which:
Fig. 1 schematically shows a cross-section over a silo with a carriage placed upon it, said carriage supporting a spool with cover on it;
Fig. 2 schematically shows a side-view of a part of said silo with said carriage and said spool with cover, in which said carriage is present near one end of said silo; and
Fig. 3 schematically shows another possibility for supporting said spool with cover.

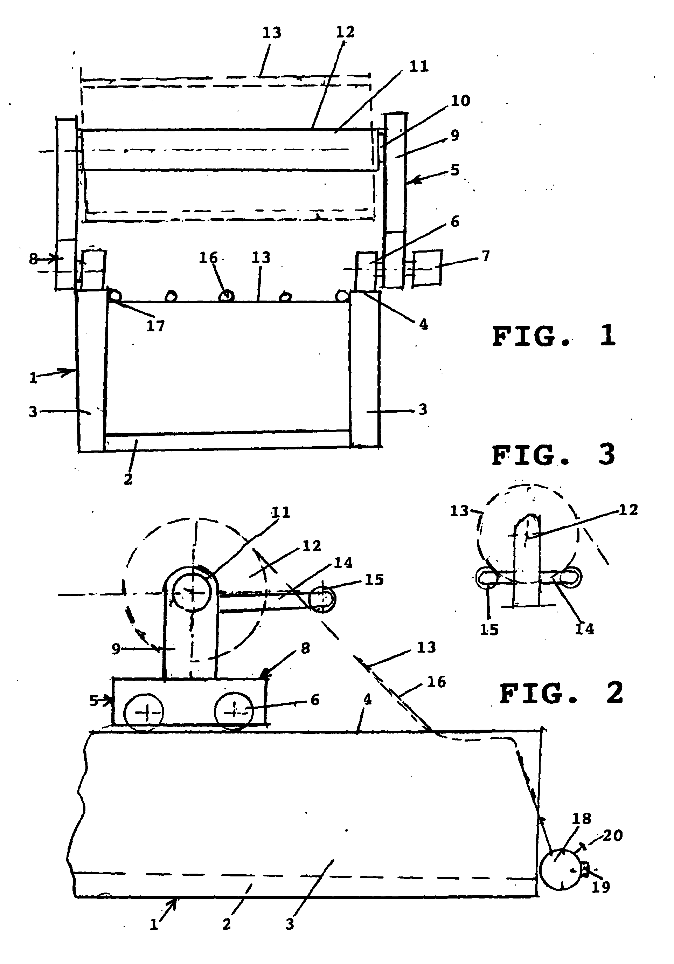

The silo 1, shown in the figures 1 and 2, consists of the bottom wall 2 and the side walls 3. Generally speaking said side walls 3 will consist of concrete elements, which partly might form the bottom wall 2.

The upper rims 4 of said side walls 3 are supporting the carriage 5 by means of the wheels 6, at least one of which can be driven as by an electric motor 7.

Obviously said carriage 5, either said upper rims 4 of said side walls 3 of said silo 1, can be provided with further means for guiding the carriage 5 in the right way.

As in particular appears from figure 2 each of said wheels 6 is mounted to a support 8, provided with a column 9. The two columns 9 of the carriage 5 are connected by means of a shaft 10 which might be hollow. Said shaft 10 might be used for supporting a sleeve 11 on which a spool 12 can be present onto which a cover 13 can be spooled.

The connection between a column 9 and the shaft 10 might be executed in such a way that the length of said shaft can be adapted to the width of the silo 1 on which said carriage 5 has to be used.

For sake of clearness said cover 13 is indicated by dotted lines as more or less cover 13 can be present on said spool 12.

Said spool can be driven directly by means of a not indicated electric motor either indirectly by means of said sleeve 11 rotatably mounted on said shaft 10.

An arm 14 can be connected to said column 9, said arm being provided with a guiding roller 15 for guiding the free end of said cover 13.

Figure 3 shows another way for supporting said spool 12 with cover 13. In this case said column 9 is provided with two arms 14 with guiding rollers 15 by which said spool with cover is suppported. At least one of said rollers 15 can be driven. This will be the guiding roller which is driving said spool 12 such that said cover is spooled onto said spool. Drawing said cover 13 from said spool 12 might take place by moving said carriage 5.

It is possible that a part of each column 9 is adjustable in vertical direction such that said spool 12 either said guiding roller or guiding rollers 15 are adjustable in height.

Further a not shown frame can be present at the end of said silo 1 onto which said carriage can be brought. By this it is easier possible to replace a spool, onto which a cover 13 is spooled, by an empty spool.

Because no cables have to be present for bringing said carriage 5 back to its initial position, said carriage can be brought easy to another silo.

As already remarked before the end of a cover 13 can be provided with a number of flexible ribbons, not shown in the drawing. By this it is possible to spool the free end of said relatively heavy cover 13 onto said spool 12 present at a much higher level.

As shown in figure 1 said cover 13 is provided with hoses 16 from which two are present near the longitudinal rims 17 of said cover 13, such that they can engage said side walls 3 of said silo 1 when said hoses are filled with liquid.

Said hoses 16, present near both longitudinal rims 17 of said cover 13, might be executed heavier than the other hoses 16 such that the engagement with the side walls 3 can be further increased.

As shown in figure 2 said hoses 16 can be connected to a supply tube 18 provided with a water supply connection 19. It is possible to supply water to the tube 18 e. g. by means of a not shown pump from out a nearby present channel. Said tube 18 can also serve for fastening either positioning the end of said cover 13.

When said cover 13, by change partly, has to be spooled onto said spool 12, it is wanted that water can be pressed out of said hoses 16, such that said cover takes in less room on said spool 12. In connection with this said tube 18 can be provided with a pessure relieve valve 20, such that the water can flow out of said hoses 16 via said tube 18.

Said supply tube 18 might be connected to a higher positioned float chamber in which always water will be present by the action of the float and a pump. Said float chamber and said hoses then are working as communicating vessels. In this case it is not necessary that the water is supplied to said hoses by means of pressure exerted on said water as this is the case in the known system.

Further when using a float chamber it is possible to provide this with an overflow so that no pressure relieve valve 20 is necessary.

When using a float chamber with overflow and pump it is possible to create a sealed liquid system by connecting said overflow to a store vessel for said liquid. By this no liquid will have to be removed out of said system and it is made easier to use an other liquid than water.

Although in various cases there is spoken of the use of water obviously it is possible to use another liquid too. So e. g. use can be made of brine to prevent freezing of the water in said system, in particular in said hoses, during the winter season. By this damage to said hoses and the other parts of said system can be prevented.

Obviously only some possible embodiments of a system according to the invention are shown in the drawing and further are described above. It will be also obvious that many modifications are possible without leaving the inventive idea as this is indicated in the appended claims.

## Claims

1. System for bringing a reusable cover (13) over, either removing it from silage, in which use is made of an U-shaped silo (1) in which said silage is stored, said system comprising a carriage (5) with wheels (6) which can roll over the upper rims (4) of the upstanding walls (3) of said silo (1), which carriage (5) supports a motoric drivable spool (12) on which said cover (13) can be spooled either unspooled, said cover being provided with longitudinally running liquid fillable hoses (16), **characterized in that** the wheels (6) of said carriage (5) are motoric driven and that along both the longitudinal rims (17) of said cover (13) hoses (16) are present which by bringing liquid into them are pressed against the walls (3) of said silo (1) over the total length of said cover (1).

2. System according to claim 1, **characterized in that** the hoses (16) extending along both longitudinal rims (17) of said cover (13) are executed stronger than the other hoses (16).

3. System according to claim 1 or 2, **characterized in that** the end of said cover (13) is provided with a number of flexible ribbons which can be connected to an empty spool (12) present on said carriage (5).

4. System according to one of the preceding claims, **characterized in that** liquid can be supplied to the hoses (16) of said cover (13) by using a float chamber which is positioned above the level of said cover (13) and in which by means of said float and a pump liquid can be present.

5. System according to claim 4, **characterized in that** said float chamber can be provided with an overflow by means of which liquid can flow away when said cover (13) is spooled onto said spool (12).
